# EUROPÄISCHE PATENTSCHRIFT

(11) **EP 0 941 893 B1**
(45) Veröffentlichungstag und Bekanntmachung des Hinweises auf die Patenterteilung: **20.10.2004**
(21) Anmeldenummer: 99103675.7
(22) Anmeldetag: 25.02.1999
(51) Int. Cl.: B60R 11/02

(54) **Elektronisches Gerät für ein Fahrzeug**
Electronic apparatus for a vehicle
Appareil électronique pour véhicule

(30) Priorität: 11.03.1998 DE 19810451
(43) Veröffentlichungstag der Anmeldung: 15.09.1999
(60) Teilanmeldung: 03003953.1
(73) Patentinhaber: Grundig Car InterMedia System GmbH, 90471 Nürnberg (DE)
(72) Erfinder: Reiss,Willy c/o Grundig Car InterMedia System GmbH, 90471 Nürnberg (DE)
(74) Vertreter: Manitz, Finsterwald & Partner

(56) Entgegenhaltungen:
- DE-A- 3 836 572
- FR-A- 2 714 760
- US-A- 5 191 312

## Beschreibung

Die vorliegende Erfindung betrifft ein elektronisches Gerät für ein Fahrzeug, insbesondere ein Autoradiogerät, mit einem Touch-Screen.

Derartige Geräte sind im Stand der Technik allgemein bekannt.

Moderne Autoradiogeräte weisen Frontplatten auf, die von einem Touch-Screen gebildet werden. Ein Touch-Screen kann beispielsweise von einer LCD-Anzeige gebildet werden, die berührungsempfindlich ist. Auf der LCD-Anzeige können beispielsweise Schaltelemente wie Tasten oder Schieberegler dargestellt und nachgebildet werden, die durch Berührung der Anzeige betätigt werden können. Mittels des Touch-Screens können alle zur Bedienung des Autoradiogerätes benötigten Schaltelemente sowie Anzeigen, beispielsweise zur Anzeige der jeweiligen Funktion der dargestellten Schaltelemente, angezeigt werden. Ebenso kann die Anzeige für die Darstellung von Einstellungswerten, wie z. B. einer eingestellten Empfangsfrequenz des Autoradios, in bekannter Weise verwendet werden.

Aus dem vorstehend beschriebenen Stand der Technik geht allerdings nicht hervor, wie der Touch-Screen in ein aktives und passives Sicherheitskonzept einbezogen werden kann, um einerseits die Bedienung des Autoradiogerätes und von daran angeschlossenen Zusatzgeräten zu vereinfachen, wodurch es einem Benutzer ermöglicht wird sich stärker auf die jeweilige Verkehrssituation zu konzentrieren, wodurch zu höherer aktiver Verkehrssicherheit beigetragen wird.

Aus der US-A-5,191,312 ist es bekannt, ein Autoradio mit einem Pager zu kombinieren und in Abhängigkeit von der Fahrzeuggeschwindigkeit das Display des Autoradios zu sperren.

Eine Aufgabe der vorliegenden Erfindung ist es, ein elektronisches Gerät für ein Fahrzeug mit einem Touch-Screen anzugeben, bei dem die aktive Sicherheit dadurch erhöht wird, daß die Aufmerksamkeit eines Benutzers bei kritischen und schwierigen Verkehrssituationen durch das elektronische Gerät weniger beeinträchtigt wird.

Die Aufgabe wird durch die Merkmale des Anspruchs 1 gelöst.

Bei dem erfindungsgemäßen elektronischen Gerät wird dabei von der Überlegung ausgegangen, daß durch die Deaktivierung von Gerätefunktionen, in Abhängigkeit von der Verkehrssituation, die Ablenkung des Benutzers verringert wird, wodurch die aktive Sicherheit erhöht wird.

Die Vorteile der Erfindung liegen insbesondere darin, daß aktive Sicherheit für ein mit dem erfindungsgemäßen elektronischen Gerät ausgestattetes Fahrzeug erhöht werden, weil die Aufmerksamkeit eines Benutzers weniger beeinträchtigt wird.

Weitere Vorteile der vorliegenden Erfindung ergeben sich aus den abhängigen Ansprüchen der erfindungsgemäßen elektronischen Geräte sowie der nachfolgenden Beschreibung eines Ausführungsbeispiels für ein elektronisches Gerät anhand von Figuren.

Es zeigt:
- Fig. 1: ein Prinzipschaltbild eines elektronischen Geräts für ein Fahrzeug mit einem Touch-Screen und mit einem daran angeschlossenen Zusatzgerät,
- Fig. 2: ein Prinzipschaltbild eines elektronischen Geräts für ein Fahrzeug mit einem Touch-Screen und mit einer Einrichtung zur Ermittlung einer Verkehrssituation,
- Fig 3: die auf dem Touch-Screen des elektronischen Geräts nach dem Prinzipschaltbilds von Fig. 2 dargestellten Schaltelemente,
- Fig. 4: ein Prinzipschaltbild eines elektronischen Geräts für ein Fahrzeug mit einem Touch-Screen und mit einer Einrichtung zur Ermittlung des Einbauumfelds des elektronischen Geräts, und
- Fig. 5: ein elektronisches Gerät mit einem Touch-Screen.

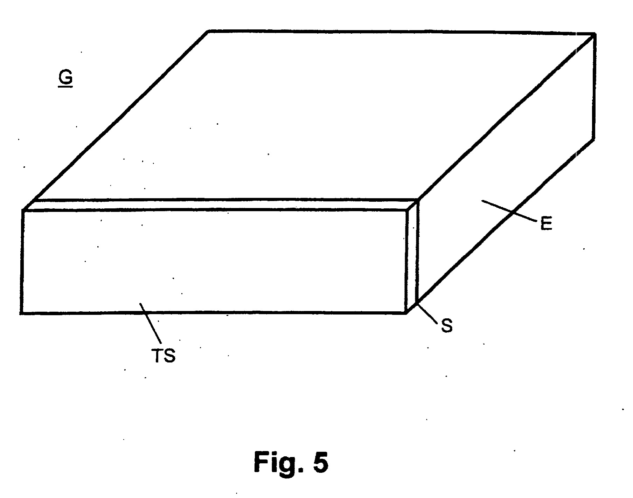

Die Figur 5 zeigt allgemein den Aufbau eines elektronischen Geräts G für ein Fahrzeug mit einem Touch-Screen TS. Das elektronische Gerät G, das beispielsweise ein Autoradiogerät sein kann, besteht aus einem Gehäuse E und einer Frontplatte, die von dem Touch-Screen gebildet wird, Die Frontplatte ist mit einem Scharnier S mit dem Gehäuse E verbunden. Durch das Scharnier S wird es ermöglicht, den Touch-Screen TS aufzuklappen oder zu schwenken, um beispielsweise eine Musikkassette in einen hinter dem Touch-Screen TS angeordneten Kassettenrecorder einführen zu können. Das Autoradiogerät G kann als Einbaugerät konzipiert sein, wobei das Gehäuse E dann in einen Einschubschacht im Armaturenbrett des Fahrzeug eingeschoben wird.

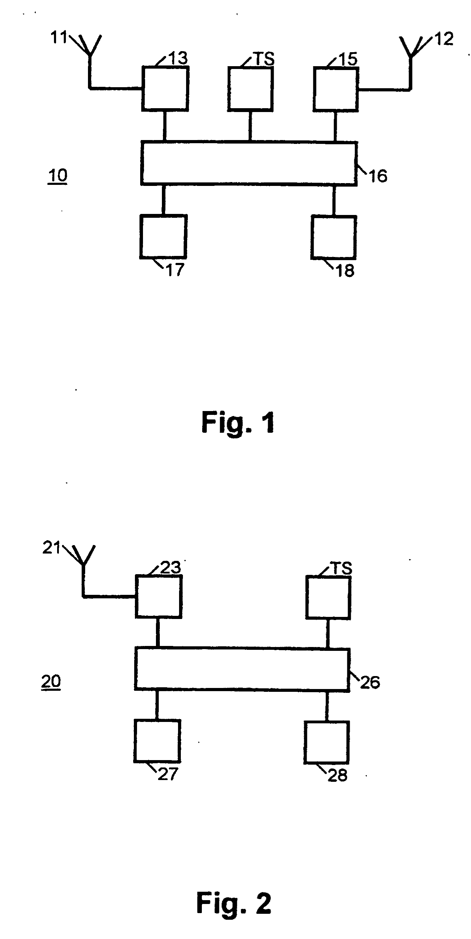

Figur 1 zeigt ein Prinzipschaltbild einer nicht beanspruchten Ausführungsform eines elektronischen Geräts 10, beispielsweise eines Autoradiogeräts, mit einem Touch-Screen TS und einem an das Autoradiogerät 10 angeschlossenen Zusatzgerät 15. Das Autoradio 10 weist außerdem einen Tuner 13 mit Antenne 11, einen Decoder 17, Lautsprecher 18 und eine Einrichtung 16 zur Steuerung und Signalverarbeitung auf, die mit allen beschriebenen Komponenten verbunden ist. Einrichtung 16 enthält unter anderem eine Steuereinrichtung, wie z. B. einen Mikrocomputer, und eine Signalverarbeitungseinrichtung, wie z. B. einen Audiosignalverstärker. An das Zusatzgerät 15, das beispielsweise ein Funktelefon sein kann, ist eine Antenne 12 angeschlossen.

Die vom Tuner 13 empfangenen Rundfunksignale werden in der Einrichtung 16 zur Steuerung und Signalverarbeitung verarbeitet und über die Lautsprecher 18 wiedergegeben. Zusatzsignale, die in den Rundfunksignalen enthalten sind, werden an den Decoder 17 weitergeleitet, der die Zusatzsignale auswertet. Bei den Zusatzsignalen kann es sich beispielsweise um RDS- oder DAB-Zusatzsignale handeln, die Informationen wie Einstellwerte, z. B. Telefonnummern enthalten können. Die vom Decoder 17 decodierten Telefonnummern werden über die Einrichtung 16 zur Steuerung und Signalverarbeitung an den Touch-Screen TS weitergeleitet und von diesem dargestellt. Durch Berührung des Touch-Screens TS kann die jeweils dargestellte Telefonnummer in einen Rufnummerinspeicher des Funktelefons 15 übernommen werden, woraufhin die entsprechende Nummer angewählt wird.

Figur 2 zeigt ein Prinzipschaltbild der beanspruchten Ausführungsform eines elektronischen Geräts 20, beispielsweise eines Autoradiogeräts, mit einem Touch-Screen TS. Das Autoradiogerät 20 weist außerdem einen Tuner 23 mit Antenne 21, eine Einrichtung 27 zur Ermittlung der Verkehrssituation, beispielsweise einen Geschwindigkeitsmesser, Lautsprecher 28 und eine Einrichtung 26 zur Steuerung und Signalverarbeitung auf, die mit allen beschriebenen Komponenten verbunden ist. Einrichtung 26 enthält unter anderem eine Steuereinrichtung, wie z. B. einen Mikrocomputer, und eine Signalverarbeitungseinrichtung, wie z. B. einen Audiosignalverstärker. Die vom Tuner 23 empfangenen Rundfunksignale werden in der Einrichtung 26 zur Steuerung und Signalverarbeitung verarbeitet und über die Lautsprecher 28 wiedergegeben.

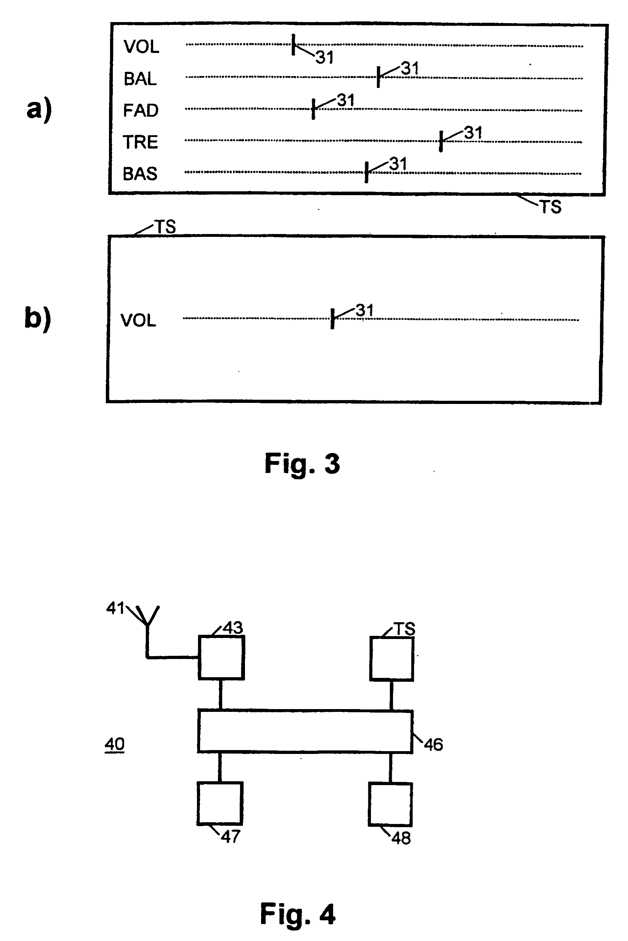

Zur Bedienung des Autoradiogeräts 20 wird der Touch-Screen TS verwendet. Dazu werden auf dem Touch-Screen TS Bedienelemente wie Taster, Schalter oder Schieberegler dargestellt, die durch Berührung des Touch-Screens TS betätigt werden können. In Figur 3 a) sind als Bedienelemente Schieberegler für Lautstärke VOL, Balance BAL, Fader FAD, Höhen TRE und Tiefen BAS dargestellt. Die jeweilige Einstellung wird durch die Regler 31 dargestellt. Soll eine der Einstellungen verändert werden, muß der jeweilige Regler 31 auf dem Touch-Screen TS berührt werden und entlang der gestrichelten Linie verschoben werden.

Um eine zu große Ablenkung des Benutzers des Autoradiogeräts 20 vom Verkehr zu vermeiden, wird durch die Einrichtung 27 zur Ermittlung der Verkehrssituation festgestellt, ob hohe Aufmerksamkeit für die jeweilige Verkehrssituation nötig ist. Dies kann beispielsweise durch Ermittlung der jeweiligen Geschwindigkeit des Fahrzeugs erfolgen. Je höher die Geschwindigkeit ist, desto höher ist auch die Anforderung an den Benutzer des Autoradiogeräts. Deshalb wird, wie in Figur 3 b) dargestellt, die Anzahl der Bedienelemente mit zunehmender Geschwindigkeit verringert. Dies kann stufenweise geschehen, wobei bei Erreichen einer vorgegebenen Schwelle nur noch das oder die wichtigsten Bedienelemente, im dargestellten Beispiel in Figur 3 b) die Lautstärke VOL, zur Verfügung steht oder stehen.

Figur 4 zeigt ein Prinzipschaltbild einer dritten nicht beanspruchten Ausführungsform eines elektronischen Geräts 40, beispielsweise eines Autoradiogeräts, mit einem Touch-Screen TS. Das Autoradiogerät 40 weist außerdem einen Tuner 43 mit Antenne 41, eine Einrichtung 47 zur Ermittlung des Einbauumfelds des Autoradiogeräts, Lautsprecher 48 und eine Einrichtung 46 zur Steuerung und Signalverarbeitung auf, die mit allen beschriebenen Komponenten verbunden ist. Einrichtung 46 enthält unter anderem eine Steuereinrichtung, wie z. B. einen Mikrocomputer, und eine Signalverarbeitungseinrichtung, wie z. B. einen Audiosignalverstärker. Die vom Tuner 43 empfangenen Rundfunksignale werden in der Einrichtung 46 zur Steuerung und Signalverarbeitung verarbeitet und über die Lautsprecher 48 wiedergegeben.

Die Einrichtung 47 zur Ermittlung des Einbauumfelds des Autoradiogerätes, also beispielsweise des Armaturenbrettes des Fahrzeugs, in das das Autoradiogerät eingebaut wird, kann aus einer Eingabeeinrichtung bestehen, mit der ein Code für das jeweilige Fahrzeug eingegeben werden kann. Ebenso kann es vorgesehen sein, daß beim Einbau des Fahrzeugs entsprechende Informationen über das Einbauumfeld automatisch beim Anschluß an das Bordnetz des Fahrzeugs an das Autoradiogerät übergeben werden. Schließlich ist es auch möglich, daß die Einrichtung 47 zur Ermittlung des Einbauumfeldes von einem Sensor gebildet wird, der das Aussehen des Einbauumfeldes ermittelt.

Immer wenn das Fahrzeug abgestellt wird, wird auf dem Touch-Screen TS das durch die Einrichtung 47 zur Ermittlung des Einbauumfelds ermittelte Aussehen des Einbauumfelds dargestellt. Als Kriterium für das Abstellen des Fahrzeugs kann beispielsweise das Ausschalten der Zündung oder das Abziehen des Fahrzeugschlüssels dienen. Bei Fahrzeugen die über ein Sicherheitssystem verfügen, bei dem im Fahrzeugschlüssel ein Transponder vorhanden ist, kann auch das Entfernen des Fahrzeugschlüssels aus dem Fahrzeug als Kriterium für die Darstellung des Einbauumfelds durch den Touch-Screen TS dienen.

Als weiteres Zusatzgerät kann an die oben beschriebenen Autoradiogeräte eine oder mehrere Einrichtung zur Entfernungsmessung angeschlossen werden. Die Einrichtungen zur Entfernungsmessung ermitteln bei einem Einparkvorgang die verbleibende Entfernung des mit dem Autoradiogerät ausgestatteten Fahrzeugs von Hindernissen. Die verbleibende Strecke zwischen einem Hindernis und dem Fahrzeug wird auf dem Touch-Screen des Autoradiogeräts als Balken dargestellt, dessen Länge proportional zur ermittelten verbleibenden Strecke ist. Auf diese Weise wird sicheres Einparken ermöglicht, ohne ein Hindernis mit dem Fahrzeug zu berühren.

## Patentansprüche

1. Elektronisches Gerät (20) für ein Fahrzeug, insbesondere ein Autoradiogerät, mit einem Touch-Screen (TS), wobei mit dem Touch-Screen (TS) Bedieneinrichtungen gebildet werden,
**dadurch gekennzeichnet,**
**daß** eine Einrichtung (27) zur Ermittlung der Verkehrssituation vorhanden ist, und daß in Abhängigkeit von der Verkehrssituation die Anzahl der mit dem Touch-Screen (TS) gebildeten Bedieneinrichtungen variiert wird.

2. Elektronisches Gerät nach Anspruch 1,
**dadurch gekennzeichnet,**
**daß** die Einrichtung (27) zur Ermittlung der Verkehrssituation ein Geschwindigkeitsmesser ist, und daß bei zunehmender Geschwindigkeit die Anzahl der durch den Touch-Screen (TS) gebildeten Bedieneinrichtungen verringert wird.

3. Elektronisches Gerät nach Anspruch 1 oder 2,
**dadurch gekennzeichnet,**
**daß** eine oder mehrere Einrichtungen zur Entfernungsmessung an das elektronische Gerät angeschlossen sind, und daß die von der oder den Einrichtungen zur Entfernungsmessung ermittelte Entfernung auf dem Touch-Sreen (TS) dargestellt wird.

## Claims

1. An electronic device (20) for a vehicle, in particular a car radio device, having a touch screen (TS), with operating devices being formed by the touch screen,
**characterised in that** a device (27) for the determining of the traffic situation is present; and **in that** the number of the operating devices formed by the touch screen (TS) is varied in dependence on the traffic situation.

2. An electronic device in accordance with claim 1, **characterised in that** the device (27) for determining the traffic situation is a speedometer; and **in that** the number of operating devices formed by the touch screen (TS) is reduced as the speed increases.

3. An electronic device in accordance with claim 1 or claim 2, **characterised in that** one or more devices for distance measuring are connected to the electronic device; and **in that** the distance determined by the device or devices for distance measuring is presented on the touch screen (TS).

## Revendications

1. Appareil électronique (20) pour véhicule, en particulier un autoradio équipé d'un écran tactile (TS), des dispositifs de manoeuvre étant formés par l'écran tactile (TS), **caractérisé en ce qu'**un dispositif (27) de détection de la situation du trafic est prévu, et **en ce qu'**en fonction de la situation du trafic, le nombre des dispositifs de manoeuvre formés par l'écran tactile (TS) est modifié.

2. Appareil électronique selon la revendication 1, **caractérisé en ce que** le dispositif (27) de détection de la situation du trafic est un appareil de mesure de vitesse, et **en ce qu'**à vitesse croissante le nombre des dispositifs de manoeuvre formés par l'écran tactile (TS) est réduit.

3. Appareil électronique selon la revendication 1 ou 2, **caractérisé en ce qu'**un ou plusieurs dispositifs de mesure de distance sont reliés à l'appareil électronique, et **en ce que** la distance détectée par le ou les dispositifs de mesure de distance est représentée sur l'écran tactile (TS).
